# EUROPÄISCHE PATENTANMELDUNG

(11) **EP 0 632 192 A1**
(43) Veröffentlichungstag der Anmeldung: **04.01.1995**
(21) Anmeldenummer: 94109618.2
(22) Anmeldetag: 22.06.1994
(51) Int. Cl.: F02C 7/24, F02C 7/045

(54) **Lufteinlasskanal für einen Gasturbinensatz**

(30) Priorität: 26.06.1993 DE 4321382
(71) Anmelder: MTU MOTOREN- UND TURBINEN-UNION FRIEDRICHSHAFEN GMBH, D-88040 Friedrichshafen (DE)
(72) Erfinder: Zoller, Ernst, D-7778 Markdorf (DE)

(57) **Zusammenfassung**

Energiesystem (1) mit einer Gasturbine (6), die in einem schallgedämpften Gehäuse (2) angeordnet ist, welches für die Kühl- und die Verbrennungsluft nur jeweils eine gemeinsame Ein- und Auslaßöffnung (3) aufweist. Der gemeinsame Lufteinlaßkanal (19,20) hat doppelte Wände (11,18), durch deren Zwischenraum (19) die Kühlluft zum Triebwerksraum (15) geleitet wird.

## Beschreibung

Die Erfindung betrifft Energiesysteme mit Gasturbinen, die in Gehäusen gelagert sind, gemäß dem Oberbegriff des Anspruchs 1.

Energiesysteme mit Gasturbinen sind besonders zur dezentralen Energieversorgung für Kommunen und Industrie geeignet. Gasturbinen können leicht an momentan verfügbare Kraftstoffe angepaßt werden und nutzen optimal die Primärenergie bei gleichzeitig minimalen CO Emissionen.

Aus der Veröffentlichung "MTU Motoren- und Turbinen- Union Friedrichshafen GmbH, MTU- Energiesysteme mit Gasturbinen, 3/93" sind Energiesysteme mit Gasturbinen in Modulbauweise bekannt. Die Gasturbinen leisten zwischen 14 000 und 23 500 kW und sind in Gehäusen untergebracht. Mit diesen Energiesystemen kann Primärenergie bis zu 90% genutzt werden, und für die Stromerzeugung ein Wirkungsgrad von über 50% erreicht werden.

Kühlluft und Verbrennungsluft für die Gasturbine werden dem Energiesystem über getrennte Öffnungen im Gehäuse zugeführt.

Mit zunehmenden gesetzlichen Auflagen zur Veringerung von Emissionen und wachsender Empfindsamkeit gegen Belästigungen aus Industrieanlagen ist die Verringerung von Schallemissionen aus Energiesystemen mit Gasturbinen zu einem bedeutsamen Kriterium für die Akzeptanz des Einsatzes dieser Systeme geworden. Schallemissionen aus dem Ansaugbereich tragen in erheblichem Maße zur gesamten Schallemission des Energiesystems bei. Durch die Auswahl eines Einsatzortes kann sich die Notwendigkeit ergeben, Luft für das Energiesystem von einem entfernten Ort anzusaugen. Lange Zufuhrleitungen großen Volumens können von der angesaugten Luft und der Rotation der Gasturbine zu Schwingungen angeregt werden und tragen dann zur Emission von Schallwellen bei.

Ein spezifisches Betriebsproblem von Gasturbinen besteht darin, daß sie bei hohen Strömungsgeschwindigkeiten der Luft vereisen.

Aufgabe der Erfindung ist es daher, ein Energiesystem mit Gasturbine zu schaffen, das im Betrieb wenig Schall emittiert.

Zusätzlich soll mit dem erfindungsgemäßen Energiesystem der Gefahr der Vereisung der Gasturbine im Betrieb entgegengewirkt werden.

Die Lösung der Aufgabe erfolgt mittels eines Energiesystems mit Gasturbine mit den Merkmalen des Anspruchs 1. Vorteilhafte Ausgestaltungen der Erfindung sind in den Unteransprüchen dargestellt.

Die mit der Erfindung erzielten Vorteile bestehen insbesondere darin, daß eine gemäß dem angegebenen Stand der Technik neben der Öffnung für die Zufuhr von Verbrennungsluft zur Gasturbine im oberen Teil des Gehäuses angeordnete extra Öffnung für die Zufuhr von Kühlluft zum Energiesystem entfällt. Die Gasturbine und das umgebende Gehäuse ist daher frei von zusätzlichen Kühlluftleitungen, die den verfügbaren Raum um die Gasturbine reduzieren und die freie Anordnung von Einrichtungen zur Nutzung der Abwärme oder zum Ausbau der Gasturbine behindern.

Die erfindungsgemäße Anordnung von Kühlluftkanälen an Wänden des Gehäuses und parallel zur Verbrennungsluftzufuhr ermög- licht die Zufuhr von ausreichenden Mengen an Kühlluft in einen Triebwerksraum der Gasturbine bei minimaler Raumbeanspruchung im Gehäuse.

Doppelte Wände, die erfindungsgemäß die Kühlluftkanäle mit dem Gehäuse des Energiesystems im Ansaugbereich der Gasturbine bilden, verleihen dem Gehäuse zusätzliche Steifigkeit, was z. B. vorteilhaft ist bei langen Zufuhreinrichtungen, die zur Zufuhr staubfrei er Luft oder zur Vermeidung lokaler Belästigungen weit auskragend sind. Insbesondere von Vorteil für das Energiesystem ist die Reduktion von Schallemissionen, die mit doppelten Wänden des Gehäuses im Ansaugbereich der Gasturbine erzielt wird, wobei die doppelten Wände des Gehäuses in mehrfacher Hinsicht zur Reduktion der Schallemissionen beitragen.

Die Emissionen der von der Gasturbine angesaugten Luft werden von doppelten Wänden des Gehäuses besser an der Weitergabe nach außen gehindert als von einfachen Wänden. Zusätzlich verhindert die auf Grund doppelter Wände erhöhte Steifigkeit des Gehäuses, daß die Rotation der Gasturbine und die ange- saugte Luft das Gehäuse zu Schwingungen anregt und beseitigt so eine weitere Geräuschquelle. Da der Anteil der Schall- emissionen aus dem Ansaugbereich der Gasturbine einen bedeutenden Teil der gesamten Schallemission des Energiesystems ausmacht, ist mit der erfindungsgemäßen Anordnung des Kühl- luftkanals ein wichtiger Beitrag zur Reduktion der Schall- emissionen derartiger Energiesysteme geleistet. Die Anordnung von Gebläsen im Kühlluftkanal sichert ausreichenden Durchsatz von Kühlluft im Triebwerksraum des Gehäuses der Gasturbine.

Gemäß einer weiteren vorteilhaften Ausgestaltung der Erfindung erstrecken sich die doppelten Wände entlang Seiten des Gehäuses im Ansaugbereich der Gasturbine. Die Schallemissionen werden reduziert und die Steifigkeit des Gehäuses wird bei geringem Materialaufwand erhöht.

Zusätzliche Reduktionen der Schallemission des Energiesystems werden durch den Einsatz von Schalldämpfungselementen und Luftfilterelementen im Kühlluftkanal und im Ansaugweg der Verbrennungsluft für die Gasturbine erzielt. Eine gemeinsame Luftfilteranlage für Verbrennungs- und Kühlluft ergibt eine raum- und kostengünstige Anordnung und ein einfaches Gehäuse. Schnittstellen zum Betriebsgebäude werden reduziert.

Eine besonders vorteilhafte Versorgung des Energiesystems mit Kühlluft ergibt sich durch den Einsatz verschließbarer, elektrischer Gebläse im Kühlluftkanal.

Ein weiterer wesentlicher Vorteil des erfindungsgemäßen Energiesystems wird durch die Umkehrbarkeit der Luftströmung im Kühlluftkanal erreicht. Die beim Betrieb der Gasturbine erhitzte Luft aus dem Triebwerksraum des Energiesystems kann durch Umschalten der elektrischen Gebläse durch den oder die Kühlluftkanäle in den Ansaugbereich für die Verbrennungsluft der Gasturbine gefördert werden und mit der so vorgewärmten Verbrennungsluft kann der Vereisung der Gasturbine vorgebeugt werden, ohne den Wirkungsgrad des Energiesystems durch Entnahme verdichteter Luft aus der Gasturbine oder die Verwendung zusätzlicher Wärmetauscher zu beeinträchtigen.

Weitere Reduktionen der Schallemissionen des Energiesystems ergeben sich erfindungsgemäß aus der Lagerung der Gasturbine, der Lagerung des Gehäuses der Gasturbine und der Ausgestaltung weiterer zum Energiesystem gehörender Aggregate.

Die Erfindung wird im folgenden anhand eines Ausführungsbeispiels dargestellt. Es zeigt:
- Fig. 1: eine teilweis geschnittene Ansicht des Energiesystems mit Gasturbine von oben,
- Fig. 2: eine teilweis geschnittene seitliche Ansicht des Energiesystems mit Gasturbine.

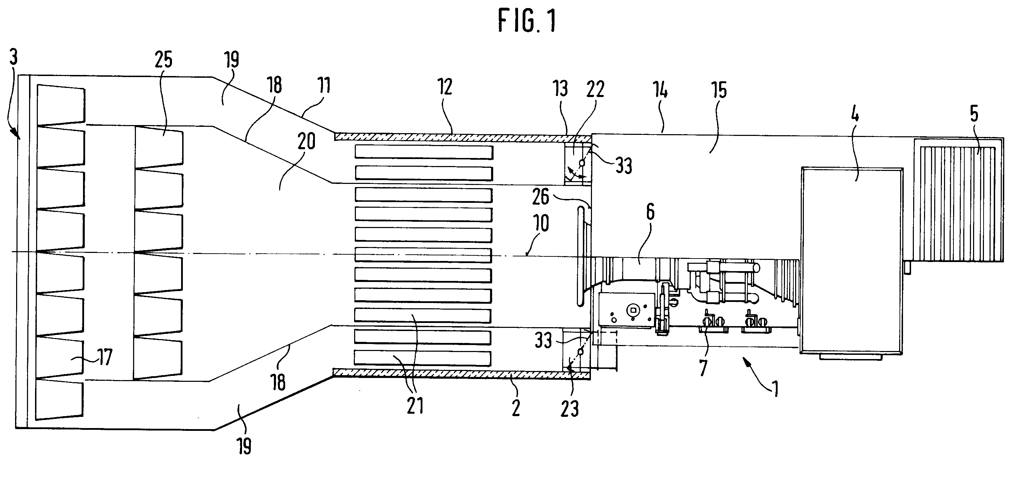

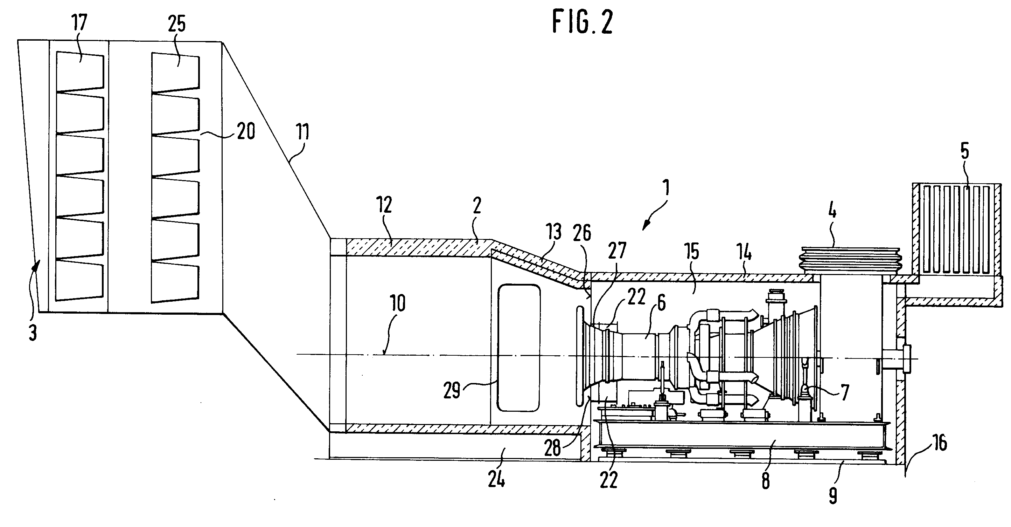

Fig. 1, Fig. 2: Ein Energiesystem 1 weist ein vorzugsweise rechteckiges kiges Gehäuse 2 mit einem Einlaß 3, einen Abgasaustritt 4 und einen im Brandfalle verschließbaren Kühlluftaustritt 5 auf. An den Abgasaustritt 4 kann über flexible Bälge ein Abhitzekessel (nicht dargestellt) angeschlossen werden. Im Gehäuse 2 ist eine Gasturbine 6 auf Pendelstützen 7 gehalten. Die Pendelstützen 7 sind auf einem Rahmen 8 gelagert, der elastisch auf einem Fundament 9 ruht, so daß kein Körperschall von der Gasturbine 6 nach außen übertragen werden kann.

Vom Lufteinlaß 3 erstreckt sich das Gehäuse 2 zunächst parallel zur Achse 10 der Gasturbine 6. In einem anschließen- den, zur Achse 10 geneigten Teil 11 des Gehäuses 2 verkleinert sich der Abstand der Seiten des Gehäuses 2. Ein weiterer anschließender Abschnitt 12 des Gehäuses 2 verläuft dann wieder parallel zur Achse 10. In einem Abschlußteil 13 nimmt die Höhe des Gehäuses 2 ab, während der Abstand der Seiten des Gehäuses 2 gleich bleibt. Abschnitt 12 und Abschlußteil 13 des Gehäuses 2 sind mit Isoliermaterial ausgekleidet. Eine Wand 26 am Abschlußteil 13 trennt den Ansaugbereich der Verbrennungsluft für die Gasturbine 6 vom Triebwerksraum 15.

Das Gehäuse 2 enthält eine an die Wand 26 anschließende Schallbox 14, die den Triebwerksraum 15 begrenzt und separat und schalldicht auf eine Fundamentschiene 16 aufgesetzt ist. Die Schallbox 14 ist vollständig getrennt von dem Rahmen 8 der Gasturbine 6 und kann beidseitig abgenommen werden, wodurch optimale Transport- und Montagebedingungen für das Energiesystem 1 in bestehenden Gebäuden geschaffen werden.

Am Lufteinlaß 3 des Energiesystems 1 ist ein Luftfilter 17 angebracht, das den gesamten Querschnitt des Lufteinlasses 3 abdeckt. Hinter dem Luftfilter 17, innerhalb des Gehäuses 2, ist der Lufteinlaß 3 durch zu den Seitenwänden des Gehäuses 2 parallele Wände 18 in Kühlluftkanäle 19 und einen Verbrennungslufteinlaß 20 unterteilt. Für die Kühlluft ist eine einstufige Filterung ausreichend. Die Wände 18 verlaufen bis zur Wand 26 parallel zu den Seitenwänden des Gehäuses 2 und sind am Gehäuse 2 in herkömmlicher Weise befestigt. Über Mündungen 27, 28 in der Wand 26 sind die Kühlluftkanäle 19 mit dem Triebwerksraum 15 verbunden.

An den Mündungen 27, 28 der Kühlluftkanäle 19 in den Triebwerksraum 15 sind jeweils zwei elektrische Gebläse 22, 23 angeordnet, die mit Rückschlagklappen oder Verstellgitter 33 ausgestattet sind.

Hinter dem Luftfilter 17 ist im Verbrennungslufteinlaß 20 ein weiterer Luftfilter 25 und im Abschnitt 13 des Gehäuses 2 ist im Verbrennungslufteinlaß 20 und in den Kühlluftkanälen 19 ein Schalldämpfer 21 angeordnet. Abschnitt 13 des Gehäuses 2 stützt sich auf einen Sockel 24.

Das Gehäuse 2 ist vorzugsweise mit Schiebetüren und Sichtfenster 29 ausgestattet. Die Leistungsübertragung von der Gasturbine 6 auf ein Untersetzungsgetriebe oder einen direkt angetriebenen zweipoligen Generator (nicht dargestellt) erfolgt über eine wartungsfreie Membrankupplung, die die thermischen Ausdehnungen der Gasturbine 6, sowie die Toleranzen der Ausrichtung und Versetzungen beim Betrieb ausgleicht. Generator und Getriebe sind auf einem Fundament fest gelagert. Vorzugsweise ist der Generator zur Reduktion von Schallemissionen gekapselt und mit interner Luftumwälzung und Wasserkühlung ausgestattet. Getriebe und Generator können mit einer zusätzlichen Schallschutzhaube abgedeckt sein.

### Verfahren zum Betrieb des Energiesystems

Beim Betrieb der Gasturbine können die elektrischen Gebläse 22, 23 angeschaltet werden, um hohen Luftdurchsatz und wirksame Kühlung im Triebwerksraum 15 zu erreichen.

Sollte über Meßeinrichtungen (nicht dargestellt) festgestellt werden, daß sich in der Gasturbine 6 Eis bildet, können die elektrischen Gebläse 22, 23 automatisch oder von Hand umgeschaltet werden und fördern dann erhitzte Luft aus dem Triebwerksraum 15 zum Einlaß 3. Die erhitzte Luft erhöht die Temperatur der angesaugten Verbrennungsluft, so daß Eis in der Gasturbine 6 aufgetaut wird.

Bei Ausfall eines der Gebläse 22, 23 schließt automatisch dessen Rückschlagklappe oder Verstellgitter 33, so daß die noch im Betrieb verbleibenden Gebläse 22, 23 die Modulkühlung aufrecht erhalten können.

## Patentansprüche

1. Energiesystem mit Gasturbine (6), die in einem Gehäuse (2) gelagert ist, welches Öffnungen (3, 4, 5) für die Zu- und Abfuhr Von Kühl- und Verbrennungsluft aufweist, wobei eine gemeinsame Einlaßöffnung (3) für Kühl- und Verbrennungsluft zur Gasturbine (6) vorgesehen ist und das Gehäuse einen Triebwerksraum (15) umfaßt, in dem die Gasturbine (6) angeordnet ist und einen stromaufwärts angeordneten Luftansaugbereich (11, 12, 13), dadurch gekennzeichnet, daß der Luftansaugbereich (11, 12, 13) durch eine Wand (26) vom Triebwerksraum (15) getrennt ist und daß das Gehäuse im Luftansaugbereich (11, 12, 13) mittels Außenwand und Innenwand (18) doppelwandig ausgebildet ist, wobei der zwischen Außenwand und Innenwand (18) entstehende Kanal als Kühlluftkanal (19) vorgesehen ist, der über Durchlässe (27, 28) in der Wand (26) in den Triebwerksraum (15) mündet.

2. Energiesystem mit Gasturbine gemäß Anspruch 1, dadurch gekennzeichnet, daß Schalldämpfer (21) in den Kühlluftkanälen (19) und im Verbrennungslufteinlaß (20) enthalten sind.

3. Energiesystem mit Gasturbine gemäß Anspruch 1, dadurch gekennzeichnet, daß Luftfilterelemente (17) in den Kühlluftkanälen (19) und im Verbrennungslufteinlaß (20) enthalten sind.

4. Energiesystem mit Gasturbine gemäß Anspruch 1, dadurch gekennzeichnet, daß in den Durchlässen (27, 28) Gebläse (22, 23) für die Kühlluft angeordnet sind.

5. Energiesystem mit Gasturbine gemäß Anspruch 1, dadurch gekennzeichnet, daß die Gebläse (22, 23) elektrisch betrieben sind.

6. Energiesystem mit Gasturbine gemäß Anspruch 5, dadurch gekennzeichnet, daß die Gebläse (22, 23) umschaltbar sind.

7. Energiesystem mit Gasturbine gemäß Anspruch 5, dadurch gekennzeichnet, daß die Gebläse (22, 23) mit Rückschlagklappen oder Verstellgittern (33) versehen sind, so daß die Gebläse (22, 23) bei Ausfall verschlossen werden können.

8. Energiesystem mit Gasturbine gemäß Anspruch 1, dadurch gekennzeichnet, daß eine Schallbox (14) des Gehäuses (2) abnehmbar und separat auf dem Fundament (9) schalldicht aufgesetzt ist.
